(19) Europäisches Patentamt
European Patent Office
Office européen des brevets

(11) EP 0 460 652 B1

(12) EUROPEAN PATENT SPECIFICATION

(45) Date of publication and mention of the grant of the patent:
**26.09.2001 Bulletin 2001/39**

(51) Int Cl.$^7$: **C08G 61/08**

(21) Application number: **91109210.4**

(22) Date of filing: **06.06.1991**

# (54) Method for producing a molded article obtained from norbornene formulations with long pot lives

Verfahren zur Herstellung eines Formkörpers aus lagerstabilen Norbornenformulierungen

Procedé de preparation des articles moulés obtenus à partir de formulations de norbornène stables à l'entreposage

(84) Designated Contracting States:
**BE DE DK FR GB IT NL SE**

(30) Priority: **08.06.1990 US 534709**

(43) Date of publication of application:
**11.12.1991 Bulletin 1991/50**

(73) Proprietor: **THE B.F. GOODRICH COMPANY**
**Akron Ohio 44313-1799 (US)**

(72) Inventors:
- **Janda, Dennis**
  **Parma, Ohio 44134 (US)**
- **Stricharczuk, Paul T.**
  **Twinsburg, Ohio 44087 (US)**

(74) Representative:
**von Kreisler, Alek, Dipl.-Chem. et al**
**Patentanwälte**
**von Kreisler-Selting-Werner**
**Postfach 10 22 41**
**50462 Köln (DE)**

(56) References cited:
**EP-A- 0 096 877**
**EP-A- 0 181 640**
**EP-A- 0 181 641**
**EP-A- 0 307 902**
**EP-A- 0 311 809**
**EP-A- 0 324 979**
**EP-A- 0 324 980**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 460 652 B1

## Description

### Background of the Invention

Polymers of cyclic olefins that contain the norbornene moiety can be made by ring-opening polymerization of the cyclic olefins in the presence of a metathesis catalyst system such as one comprising an alkylaluminum halide or trialkylaluminum cocatalyst together with at least one tungsten or molybdenum compound catalyst.

Bulk polymerization is defined as polymerization in the absence of a solvent or diluent. Early attempts of bulk polymerization reactions were too rapid and therefore, uncontrollable. Furthermore, the known initial bulk polymerization attempts resulted in materials that were very dark, had poor physical properties, and poor appearance.

Further developments in the bulk polymerization of cycloolefins led to another approach which, likewise, was unsuccessful. This approach was characterized by splitting the monomer charge into two equal portions, one containing the catalyst and the other containing the cocatalyst. The object was to mix the two portions of the monomer charge at room temperature and then transfer the mix to a heated mold where polymerization and hardening would occur very quickly. It was discovered that instantaneous reaction took place upon contact of the two portions whereby a polymer barrier was formed between the two portions of the monomer charge, encapsulating some of the monomer from each portion. This was an indication of uncontrollable polymerization which prevented mixing.

A further development set forth in U-S.-A-4,426,502 relates to ring opening polymerization in bulk of at least one monomer containing the norbornene group or a mixture of such monomers using a ring opening metathesis catalyst system wherein the cocatalyst is transformed to an alkoxyalkylaluminum or aryloxyalkylaluminum halide by reaction with at least one alcohol or active hydroxyl-containing compound prior to subsequent contact and reaction with at least one tungsten or molybdenum compound catalyst. The cyclic olefins are formed into hard objects in a single step by means of a reaction injection molding (RIM) process. Examples of such objects are business machine housings, furniture, window frames, and the like.

The gel times and pot lives of reaction injection molding formulations of norbornene functional monomers are relatively short. The short pot lives present problems when reactive molding processes other than RIM, such as resin transfer molding (RTM), are used. When work interruptions take place during molding operations, expensive, time consuming solvent flushing of a reactive mix from the mixing chamber is required following work interruptions longer than the pot life of the reactive mix.

The short gel times and pot lives of these molding formulations also make it difficult to mold objects weighing 22.67 kg (50 pounds) or more. Large molds are difficult to fill without the formation of gel, resulting in defects such as "knit lines" and voids in the molded article.

Reaction mixes of norbornene functional monomers with prolonged pot lives and gel times have been described in the copending parent applications, Serial Nos. 07/140,061 and 07/140,062, both filed on December 31, 1987, by Dennis Janda, corresponding to EP-A-0324980 and EP-A-0324979, respectively.

In these reaction mixes, all or a portion of the cocatalyst used for the metathesis catalyst system is prepared by reacting an alkylaluminum or alkylaluminum halide with a branched or hindered alcohol. These include tertiary alcohols, hindered secondary alcohols and hindered primary alcohols. As disclosed in copending application Serial No. 07/140,061, corresponding to EP-A-0324980, the molding temperature is also reduced by 10 to 80°C where the cocatalyst is formed using a combination of alcohols. This allows for the use of plastic rather than metal molds.

The gel times and pot lives of other reactive monomer formulations can be extended by other means, such as by reducing the mold temperature. However, the reaction mixes and methods described in Serial Nos. 07/140,061 and 07/140,062, corresponding to EP-A-0324980 and EP-A-0324979, respectively, have been most effective.

The prolonged pot lives or gel times have permitted a more uniform fill and cure of these reaction mixes in large molds. Large articles can be molded without structural defects such as "knit lines" or voids caused by premature gelation. However, small voids near the surface of the part can still occur when molding large parts in excess of 226.5 kg (500 pounds).

EP-A-0324980, EP-A-0324979 and EP-A-0096877 disclose the reaction injection molding for the formation of small parts and articles. Rosato's Plastics Encyclopedia and Dictionary, ed. D.V. Rosato, Hanser Verlag, Munich 1993, pages 78, 396, 483-484 relates to the injection molding of a molten polymer resin.

### Summary of the Invention

The present invention is related to a method for producing a molded article weighing in excess of 500 lbs. (226.8 kg) by the ring-opening bulk polymerization of a reactive formulation, said method comprising combining a plurality of reactant streams to form said reactive formulation having a gel time in excess of 2 minutes at 40 °C and conveying said reactive formulation into a mold where polymerization takes place, wherein one of said reactant streams contains a metathesis catalyst component, and a second of which contains a cocatalyst component in combination

with at least one norbornene-functional monomer, said cocatalyst component is selected from an alkoxyalkylaluminum or alkoxyalkylaluminum halide derived from an alkylaluminum or alkylaluminum halide and a combination of a first alcohol and a second alcohol, said first alcohol is selected from tertiary alcohols, hindered primary alcohols, hindered secondary alcohols and mixtures thereof, and said second alcohol is selected from unhin- dered primary alcohols, unhindered secondary alcohols, and mixtures thereof, wherein said alkylaluminum halide and said first and second alcohols are reacted in the norbornene-functional monomer to form the alkoxyalkylaluminum halide cocatalyst composition, and wherein the components of the reactive formulation are degassed prior to use to reduce the level of dissolved gas to provide a head-space ratio value of below 5, wherein the head-space ratio parameter of a liquid is the mole percent of gas in the head-space of a closed vessel which evolved from a sample of the liquid at 25°C after 15 minutes, wherein said head-space is initially filled with inert gas at 98066.5 Pa (1 atm) pressure and has volume equal to 25% of the total volume of said closed vessel.

Preferred embodiments of the invention become evident from the dependent claims.

Large molded articles in excess of 22.65kg (fifty pounds) can be produced without structural defects from reactive formulations of norbornene functional monomers (cyclic olefins) where the reactive formulation has a gel time in excess of two minutes at 40°C and a reduced level of dissolved gas.

The level of dissolved gas in the reactive formulation is reduced to provide a value for the head space ratio parameter (HSR parameter) of less than 5. The HSR parameter is defined with greater particularity below.

## Detailed Description of the Invention

The invention is directed to large molded articles obtained from reactive formulations of norbornene functional monomers with prolonged gel times (times to exotherm) and reduced levels of dissolved gas. The invention is also directed to selected reactive formulations and their components, used to provide these molded articles.

The term "reactive formulation", as used herein, refers to a mixture of at least one monomer having norbornene functionality and a metathesis catalyst system which causes the norbornene functional monomers to polymerize in bulk. The metathesis catalyst system includes a metathesis cocatalyst and a metathesis catalyst. The metathesis catalyst system used in the production of the large molded articles of the present invention provide a reactive formulation with a gel time (time to exotherm) at 40°C in excess of 2 minutes. For large parts in excess of 226.5kg (500 pounds), a reactive formulation with a gel time in excess of 10 minutes at 40°C is preferred, and in some instances, a gel time in excess of 20 minutes at 40°C may be desirable.

Pot life, as used herein, refers to the time during which polymerization of the reactive formulation at ambient conditions remains essentially dormant. Stated differently, pot life is the time interval between mixing of the ingredients to form the reactive formulation and commencement of monomer polymerization at ambient conditions. Gel time or time to exotherm is often similar to pot life, but need not be. Gel time is the time interval between mixing the ingredients and the initiation of polymerization at the temperature of the reactive formulation. A reactive formulation may have a long pot life at ambient temperature, but may polymerize rapidly in the mold, particularly where high mold temperatures are used. Both pot life and gel time depend on many variables such as the amount and type of catalyst component, impurities present in the system, the ratio of catalyst to cocatalyst, etc.

Pot life and gel time also depend on the reducing power of the cocatalyst; the higher the reducing power, the shorter the gel time. A preferred reactive formulation contains a metathesis catalyst system that includes a cocatalyst formed by the reaction of a combination of alcohols with an alkylaluminum or alkylaluminum halide. This cocatalyst provides a reactive formulation with a prolonged pot life and gel time. The combination of alcohols used in the formation of this cocatalyst comprises a branched or hindered alcohol in combination with an unhindered alcohol. The first series of alcohols include tertiary alcohols, hindered secondary alcohols, hindered primary alcohols and mixtures thereof. The second alcohol is selected from unhindered primary alcohols, unhindered secondary alcohols and mixtures thereof. The mole ratio of these alcohols fall in the range of 1:10 to 10:1, preferably 1:5 to 5:1, and more preferably 1:2 to 2:1, of said first alcohol to said second alcohol. By using a combination of alcohols, the metathesis catalyst system also provides a reactive formulation having a lower molding temperature, i.e., a lower temperature at which exotherm is initiated. The temperature of the mold used to produce the large articles of the present invention is preferably below 100°C, most preferably below 40°C. This is much lower than the mold temperatures used with more reactive formulations in the manufacture of small parts.

The metathesis catalyst system can be formed by combining a plurality of streams in a mold where polymerization is accomplished. One stream contains a metathesis cocatalyst (component A) and another stream contains the metathesis catalyst (component B). If the cocatalyst is devoid of halide, a halometal activator is preferably added to the cocatalyst stream or added in a separate stream. At least one monomer having norbornene functionality is introduced in one or more streams.

Impingement mixing apparatus can be used to mix the components of the reactive formulation. The reaction injection molding industry uses the impingement mixing apparatus nearly exclusively due to the short pot lives of most

available RIM chemical systems. With an impingement mixing apparatus, the catalyst and cocatalyst can be nearly instantaneously mixed and injected into the mold. While the large molded articles of this invention can be obtained using a RIM system, they can also be produced from other reactive molding processes, RTM and casting (pour molding) being two of these. The longer pot lives, longer gel times and lower molding temperatures show particular advantage in these other reactive molding processes. However, RIM systems also benefit from these properties where the large molded articles of this invention contain mats or preforms of reinforcing fiber. These mats or preforms are placed in the mold cavity, necessitating a slow mold fill rate and requiring non-reaction of the reaction mix or reactive formulation during the longer than usual mold fill time. RIM systems will also benefit when forming very large parts in excess of 45.3 and 226.5kg (100 and 500 pounds) in that a slow mold fill rate is often necessary to prevent turbulence in the mold cavity.

It has been discovered that by lowering the reducing power of the cocatalysts, longer gel times can be provided to mold large parts. A cocatalyst with less reducing power can be obtained by reacting an alcohol combination with an alkylaluminum or alkylaluminum halide to produce an alkoxyalkylaluminum, aryloxyalkylaluminum, alkoxyalkylaluminum halide or aryloxyalkylaluminum halide cocatalyst, which is soluble in the norbornene functional monomer. The combination of alcohols used to form the cocatalyst comprises at least one branched or hindered alcohol selected from tertiary alcohols, hindered primary alcohols, hindered secondary alcohols and mixtures thereof, together with at least one unhindered alcohol selected from primary and secondary alcohols and mixtures thereof. The preferred respective molar ratio of hindered to unhindered alcohol is 2:1 to 1:2.

To describe this in another fashion, the alcohol combination includes a first alcohol and a second alcohol. The first alcohol is selected from the branched alcohols or a mixture of such alcohols in column A, below, and the second alcohol is selected from the alcohols or a mixture of the alcohols in column B, below:

| Column A | Column B |
|---|---|
| tertiary alcohols<br>hindered secondary alcohols (7-31Cs)<br>hindered primary alcohols (8-32Cs) | unhindered primary alcohols<br>unhindered secondary alcohols |

A tertiary alcohol is one wherein the carbon carrying the hydroxyl group is devoid of hydrogen atoms, i.e., where the carbon atom is bonded to the hydroxyl group and other carbon atoms. Suitable tertiary alcohols suitable herein include saturated and unsaturated tertiary alcohols that contain 4 to 34, preferably 4 to 19 carbon atoms. Suitable tertiary alcohols which are devoid of rings, i.e., acyclic tertiary alcohols, contain 4 to 19, preferably 4 to 13 carbon atoms whereas suitable tertiary alcohols that contain at least one cyclic structure, have 9 to 34, preferably 9 to 24 carbon atoms. Specific examples of suitable tertiary alcohols include t-butanol, t-amyl alcohol, 3-ethyl-3-pentanol, 3-methyl-3-pentanol, 2-methyl-2-hexanol, triphenyl methanol, 2-ethyl-2-hexanol, 2-propyl-2-hexanol, 3-methyl-3-hexanol, 3-ethyl-3-hexanol, 3-propyl-3-hexanol, 1-phenyl, 1-methyl-1-ethanol, and 1-phenyl, 1-ethyl-1-propanol.

Primary alcohols contain two hydrogen atoms bonded to the carbon atom which carries the hydroxyl group. Suitable primary alcohols include saturated and unsaturated alcohols which can be totally acyclic or which can contain cyclic groups, including phenyl groups. Suitable hindered primary alcohols contain 5 to 32, preferably 5 to 18 carbon atoms. The acyclic primary alcohols are often preferred. Suitable hindered primary alcohols contain the following group I in their structures:

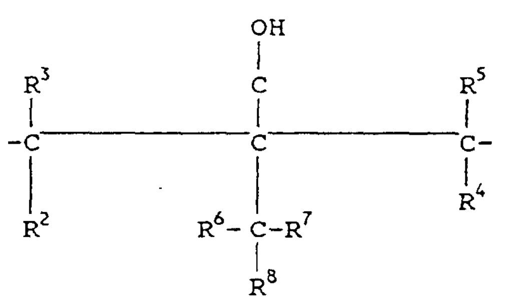

(I)

In the above Group I, $R^2$, $R^3$, $R^4$, $R^5$, $R^6$, $R^7$ and $R^8$ are individually selected from $R^7$ and $R^8$ are individually selected from hydrogen, alkyl, alkenyl, alkinyl, cycloaliphatic, and aryl groups of 1 to 12, preferably 1 to 6 carbon atoms. In a preferred group I embodiment, $R^2$, $R^3$, $R^4$, $R^5$, $R^6$, $R^7$ and $R^8$ are individually selected from hydrogen and alkyl groups of 1 to 6 carbon atoms. Specific examples of suitable hindered primary alcohols include neopentyl alcohol, 2,2-dimethyl-1-butanol, 2,2-diethyl-1-butanol, 2-methyl, 2-ethyl-1-propanol, 2-methyl, 2-ethyl-1-butanol, 2,2-dipropyl-1-pentanol, 2,2-dipropyl-1-hexanol and 2-propyl, 2-ethyl-1-hexanol. All other primary alcohols are unhindered, examples of which include ethanol, propyl alcohols, butyl alcohols, heptyl alcohols, dodecyl or lauryl alcohol, hexadecyl or cetyl alcohol, and allyl alcohol. Suitable unhindered primary alcohols contain 1 to 32, preferably 2 to 18 carbon atoms.

Suitable hindered secondary alcohols contain 7 to 32, preferably 7 to 12 carbon atoms and are characterized by the presence of the following group II in their structures:

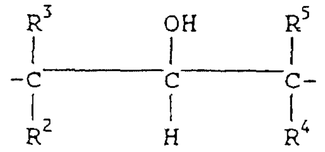

(II)

In the above Group II, $R^3$ and $R^5$ are individually selected from hydrogen, alkyl, alkenyl, alkinyl, cycloaliphatic and aryl groups of 1 to 12 carbon atoms and $R^2$ and $R^4$ are individually selected from alkyl, alkenyl, alkinyl, cycloaliphatic and aryl groups of 1 to 12 carbon atoms. In a preferred group II embodiment, $R^3$ and $R^5$ are individually selected from hydrogen and alkyl groups of 1 to 6 carbon atoms and $R^2$ and $R^4$ are individually selected from alkyl groups of 1 to 6 carbon atoms. Specific examples of suitable hindered secondary alcohols include 2,4-dimethyl-2-pentanol, 3,5-dimethyl-4-heptanol, 2,4-diethyl-3-hexanol, 2,4-dimethyl-3-hexanol, 2-methyl, 4-ethyl-3-hexanol and 2-methyl, 4-ethyl-3-heptanol. Specific examples of suitable unhindered secondary alcohols include 3-pentanol, 3-heptanol, sec-butanol, benzyl alcohol, 5-methyl-2-hexanol, and the like. Suitable unhindered secondary alcohols are devoid of group II structure and contain 3 to 22, preferably 3 to 12, carbon atoms.

The alcohol combinations defined above which provide the longer gel times must be soluble monomers having norbornene functionality (cyclic olefins that contain the norbornene moiety) that can bulk polymerized to polymers by ring opening polymerization.

The alcohol combinations can be prereacted with the alkylaluminums or alkylaluminum halides to form a more concentrated cocatalyst solution before adding it to the system or these components can be added to the full monomer quantity necessary to make up the formulation component whereby the cocatalyst is formed in situ. In making the cocatalyst, the ingredients thereof are initially individually diluted in a norbornene-type monomer. Then, they can be combined in a number of different ways, however, it is preferred to first combine the alkylaluminum or alkylaluminum halide with the first alcohol selected from tertiary alcohols, hindered primary alcohols and hindered secondary alcohols, and then added the unhindered primary alcohol or unhindered secondary alcohol, or a mixture thereof. Such reactions are conducted in absence of water, by providing a blanket of nitrogen and mixing the ingredients. The reactions are rapid and result in evolution of volatile hydrocarbons, such as ethane, if diethylaluminum chloride is the cocatalyst component. The reactions go essentially to 100% completion.

The alkoxy or aryloxy group in the cocatalyst functions to inhibit the reducing power of the cocatalyst by replacing some of the alkyl groups on the aluminum thus making it possible to mix, fill a large mold and subsequently react the monomers having norbornene functionality in the mold via bulk polymerization. It should be understood that a stoichiometric excess of alcohol or a hydroxyl-containing material must be avoided. Stoichiometric excess herein is defined as twice the number of moles of the alcohol combination or hydroxyl-containing material in excess of the molar amount of the alkylaluminum moiety, which renders the aluminum compound ineffective as a reducing agent or cocatalyst. It is usually sufficient to employ approximately an equimolar ratio of these ingredients to obtain a long pot life, long gel time and low molding temperature.

Preferred alkylaluminums and alkylaluminum halides that can be reacted with the alcohol combinations described above include
monoalkylaluminum dihalides, $R^1AlX_2$,
dialkylaluminum monohalides, $R^1_2AlX$,
alkylaluminum sesquihalides, $R^1_3Al_2X_3$,
trialkyl aluminum, $R^1_3Al$, and mixtures thereof. In these formulas, $R^1$ is an alkyl radical containing 1 to 12 carbon atoms, preferably about 1 to 8 carbon atoms, and X is a halogen selected from chlorine, iodine, bromine and fluorine. Specific examples of such alkylaluminums and alkylaluminum halides include ethylaluminum dichloride, diethylaluminum monochloride, ethylaluminum sesquichloride, diethylaluminum iodide, ethylaluminum diiodide, propylaluminum dichloride, propylaluminum diiodide, isobutylaluminum dichloride, ethylaluminum dibromide, methylaluminum sesquichloride, methylaluminum sesquibromide, trioctylaluminum, triethylaluminum, and triisobutylaluminum.

The cocatalyst obtained has the formula

$$(R^9O)_aR^{10}_bAlX_c$$

wherein $R^9$ is selected from a combination of one or more of said first alcohols and one or more of said second alcohols containing 4 to 34 carbon atoms; $R^{10}$ is an alkyl radical containing 1 to 12 carbon atoms, preferably 2 to 8, as defined above, X is a halogen selected from chloride, iodine, bromine and fluorine, preferably chlorine; and Al represents aluminum. In the halide-containing cocatalysts, "a" is the number of equivalents of the alkoxy or aryloxy moiety ($R^9O$-) and can vary from a minimum of 0.5 to a maximum of 2.5, preferably from 0.75 to 1.5; "b" is the number of equivalents of the alkyl group ($R^{10}$) and can vary from a minimum of 0.25 to a maximum of 2, preferably from about 0.5 to 1.5; and "c" is the number of equivalents of halogen X and can vary from a minimum of 0.5 to a maximum of 2, preferably from 0.75 to 1.25. In cocatalysts devoid of a halogen, "a" is 0.7 to 1.5, preferably 0.75 to 1.25; "b" is 1.5 to 2.3, preferably 1.75 to 2.25; and "c" is zero. Such cocatalysts devoid of a halide typically require the presence of an activator. The sum of "a", "b" and "c" must equal 3.

The molar ratio of aluminum in the cocatalyst to molybdenum or tungsten in the catalyst for the preferred metathesis catalyst system is typically in the range of 200:1 to 1:10, preferably 10:1 to 2:1. 0.1 to 10 millimoles of molybdenum or tungsten catalyst is used per mole of monomer that is polymerized, with this metathesis catalyst system. On the monomer basis, molar ratio of aluminum to monomer in the preferred metathesis catalyst system is 0.01 to 2,000, preferably 0.2 to 100 millimoles of aluminum per mole of monomer.

The presence of a halide, such as a chloride, in the preferred metathesis catalyst system is imperative. If the cocatalyst does not contain any halide, then an activator is used to supply halide to-the system. Suitable activators are selected generally from halometal compounds and more specifically from halosilanes of the formula

$$R^{11}_mSiX_n$$

where m is 0-3, n is 1-4, $R^{11}$ is individually selected from hydrogen, alkyl and alkoxy groups containing 1 to 6 carbon atoms, and X is selected from chlorine, fluorine, bromine, and iodine, particularly chlorine. Specific examples of preferred activators are chlorosilanes such as dimethylmonochlorosilane, dimethyldichlorosilane, diphenyldichlorosilane, tetrachlorosilane, and the like. Amount of the activator that is used is in the range of 0.05 to 10 millimoles per mole of the norbornene-containing monomer, preferably 0.1 to 2 millimoles per mole of monomer.

Molybdenum and tungsten compound catalysts used in the preferred metathesis catalyst system are organoammonium molybdates and organoaluminum tungstates that are selected from those defined as follows:

$$R^{12}_4N]_{(2y-6x)}M_xO_y \qquad R^{13}_3NH]_{(2y-6x)}M_xO_y$$

where O represents oxygen, M represents either molybdenum or tungsten; x and y represent the number of M and O atoms in the molecule based on the valence of +6 for molybdenum, +6 for tungsten, and -2 for oxygen; and the $R^{12}$ and $R^{13}$ radicals can be the same or different and are selected from hydrogen, alkyl and alkylene groups each containing from 1 to 20 carbon atoms, and cycloaliphatic groups each containing from 5 to 16 carbon atoms. All of the $R^{12}$ and $R^{13}$ radicals cannot be hydrogens nor be small in the number of carbon atoms since such a conditions will render the molecule essentially insoluble in hydrocarbons and most organic solvents. In more preferred embodiments, the $R^{12}$ radicals are selected from alkyl groups each containing 1 to 18 carbon atoms wherein the sum of carbon atoms on all the $R^{12}$ radicals is from 20 to 72, most preferably from 25 to 48. In more preferred embodiments, the $R^{13}$ radicals are selected from alkyl groups each containing from 1 to 18 carbon atoms wherein the sum of carbon atoms on all of the $R^{13}$ radicals is from 15 to 54, most preferably from 21 to 42.

Specific examples of organoammonium molybdates and organoammonium tungstates used in the preferred metathesis catalyst system include tridodecylammonium molybdates and tungstates, methyltricaprylammonium molybdates and tungstates, tri(tridecyl)ammonium molybdates and tungstates, and trioctylammonium molybdates and tungstates.

These organoammonium molybdate or organoammonium tungstate catalysts, or mixtures thereof, are employed at a level of 0.01 to 50 millimoles molybdenum or tungsten per mole of total monomer, preferably 0.1 to 10 millimoles per mole of total monomer.

While it is important that the reactive formulations have a gel time in excess of 2 minutes at 40°C, and preferably in excess of 10 minutes at 40°C, it has been found necessary for the reactive formulations to nave a very low dissolved gas content. This is necessary because the prolonged gel times allow the dissolved gas therein to coalesce, forming large voids in the finished article. The components of the reactive formulation are easily degassed prior to use

by applying a vacuum with or without nitrogen purge and with or without agitation. Elevated temperatures can also be used (50°C). Degassing can be performed immediately before injection into the mold.

Where the components of the reactive formulation are tested to determine the head space ratio parameter value, the head space ratio parameter for the reactive formulation is calculated as the weighted average of the component values.

Without special efforts to degas the components of the reactive formulation, the cocatalyst component was found to have a head space ratio parameter value of 17.

A head space ratio parameter value of less than 5 has been found necessary to produce parts with good surface appearance. Preferably the head space ratio parameter value for the reactive formula is below 1, particularly for molded articles in excess of 226.5kg (500 pounds).

The head space ratio parameter of a liquid is determined by measuring the mole percent of gas which evolves from a sample of the liquid at 25°C into the head space of a closed vessel after 15 mins., wherein the head space is initially filed with nitrogen or other inert gas at 101.3 kPa (1 atm) pressure. The head space has a volume equal to 25% of total volume of said closed vessel. Variations of this procedure can be used to provide approximation of the head space parameter value. In making a comparative analysis, the volume of the liquid samples tested and the head space should be constant.

In that the cocatalyst component of the preferred metathesis catalyst system will generate ethane gas upon reaction of the diethylaluminum chloride with an alcohol, the dissolved ethane within this component can cause problems during molding unless removed. Cocatalyst compositions with a head space ratio parameter of less than 5 are also provided by this invention.

In making the molded article of the present invention, reactive formulations with long gel times allow the mold to be filed under conditions of non-turbulent flow. Preferred feed ratios range from 0.91-3.63kg/s (2-8 lbs/second). This avoids the formation of bubbles and allows for the displacement of air/$N_2$ in the mold. The large molds are typically purged with nitrogen so as not to deactivate the catalyst.

The monomers having norbornene functionality that can be polymerized in bulk, also referred to herein as "cycloolefin monomers" and "cyclic olefins that contain the norbornene moiety", are characterized by the presence of at least one norbornene group identified by formula I, that can be substituted or unsubstituted:

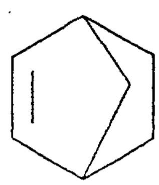

Preferred monomers are those defined by the following formulas II and III:

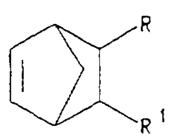

II

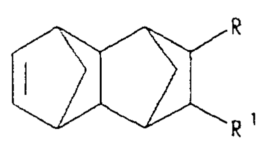

III

where $R^{14}$ and $R^{15}$ are independently selected from hydrogen, alkyl, and aryl groups of 1 to 20 carbon atoms, and saturated and unsaturated cyclic groups containing 3 to 12 carbon atoms formed by $R^{14}$ and $R^{15}$ together with the two ring carbon atoms connected thereto. In a preferred embodiment, $R^{14}$ and $R^{15}$ are independently selected from hydrogen and alkyl groups of 1 to 2 carbon atoms.

Examples of cycloolefin monomers referred to herein include norbornene, dicyclopentadiene, ethylidene norbornene, dihydrodicyclopentadiene, trimer of cyclopentadiene (or tricyclopentadiene), tetramers of cyclopentadiene (or tetracyclopentadiene), tetracyclododecene, hexacycloheptadecane 2-norbornene and substituted derivatives thereof such as 5-methyl-2-norbornene, 5,5-dimethyl-2-norbornene, 5-ethyl-2-norbornene, 5-butyl-2-norbornene, 5-hexyl-2-norbornene, 5-octyl-2-norbornene, 5-dodecyl-2-norbornene and methyltetracyclododecene.

This invention especially contemplates preparation of articles comprised of homopolymers, copolymers and terpolymers of methylnorbornene, ethylidene norbornene, trimers and tetramers of cyclopentadiene, methyltetracyclododecene and dicyclopentadiene.

The molded articles of the present invention are preferably obtained by reactive molding processes such as resin transfer molding and reaction injection molding. Typically, in such processes, one-half of a norbornene functional monomer is added to one tank, together with a cocatalyst, and the other half is added to another tank along with a catalyst. The cocatalyst and the catalyst must be soluble in the norbornene functional monomers. Other additives can be admixed with the monomer in either or both tanks. Agitators are provided in the tanks to facilitate mixing of the formulation components and each tank is connected to a nitrogen source through respective lines so that each tank can be maintained under a blanket of nitrogen.

During molding operation, valves are manipulated to admit the formulation components from their respective tanks into a mix head where they are mixed at room or ambient temperature and conveyed to a mold. In conventional thermally initiated systems, the mold is preferably maintained at a temperature in excess of 40°C, and often in the range of 50°C to 100°C. In forming the articles of the present invention, this is not necessarily the case. For the present invention, it is preferable to maintain a low mold temperature so that gelation is not premature. Mold temperatures at and below 40°C are preferred. Using low mold temperatures delays the gel time (time to exotherm). The mold temperature may also be varied with some portions remaining at ambient temperature and others being heated. The male and female sections of a mold may be heated, depending on which is preferred to have the better surface.

Mold temperature is important for other reasons as well. It is generally desirable to carry out a polymerization reaction at as low a mold temperature as possible in order to better control the reaction, to save energy costs, facilitate part demolding and other reasons. If temperatures exceeding 90°C are used to carry out a reaction, metal molds are used. If temperatures below 80°C are used to carry out a reaction, plastic molds can be used. Needless to say, metal molds are much more expensive than plastic molds and it is also for this reason that temperatures below 80°C are preferred so that the reaction can be carried out in a plastic mold.

On initiation of gelation, a rapid exotherm results and the temperature increases to over 100°C in two minutes. At this time, polymerization is completed and the temperature begins to drop as the solid, molded object starts to cool. When sufficiently cooled, the mold is opened and the object is removed.

Generally speaking, once the reaction is initiated as evidenced by the rapid exotherm, it takes only a short time for polymerization to take place. Due to the large size of the parts produced, exotherm may be detected at various portions of the mold over a 2 minute period. This, of course, depends on many variables such as the particular monomers and additives used, mold temperatures, specific catalyst and cocatalyst system employed, etc.

## Head Space Ratio Parameter

The head space ratio parameter characterizes the amount of dissolved gas within a monomer component. To determine the parameter value for a liquid such as a monomer component, a sample of the component is allowed to stand for at least 15 minutes within a sealed quart container, such as a pop bottle, under a nitrogen blanket or other inert gas at atmospheric pressure. For an accurate test, the volume of liquid component is maintained at 75% of the total volume for the container used. If an approximate value is desired, variations in the volume of liquid component can be used. For example, approximate values were obtained by setting a standard level within a 0.946 l (quart) pop bottle of 15.88 cm (6.25") from a bench top. This is about 75% of the total volume of the pop bottle. If relative measurements are desired, the liquid volume selected must be constant. Partially filling the closed container leaves a head space of 25% of the total volume of the closed container. If an accurate measurement is desired, the head space should not be filed with an inert gas expected to be dissolved in the liquid. After standing for over 15 minutes at 25°C, a sample of the head space is withdrawn by syringe and injected into a GC (gas chromatograph). The GC is maintained at 50°C with a run time of 5 minutes, injection port temp. = 250°C, chart speed: 1 cm/min, zero-10, attenuation - 16, slope sensitivity - 0 and flow rate 20 mls/min.

The relative amounts for each component of the head space are recorded and corrected for thermal conductivity. The relative area of the peaks for gases other than nitrogen (or other inert gas) determines the mole% of dissolved gas which evolved into the head space, which is value used for the head space ratio parameter.

## EXAMPLES

The following components were used in each of examples 2-5. The level of alcohol introduced to component A (cocatalyst component) varied to provide the different gel time targets. The alcohol:aluminum ratio of the cocatalyst component is indicated in each example.

| Component A cocatalyst component | weight kg (lbs.) |
|---|---|
| Dicyclopentadiene (DCPD) | 157.39 (347.45) |
| Ethylidene norbornene (ENB) | 12.76 (28.17) |

(continued)

| Component A cocatalyst component | weight kg (lbs.) |
|---|---|
| Diene 55 polybutadiene | 6.34 (14.0) |
| 20% n-propanol solution (PrOH) in DCPD/ENB 92.5/7.5 5 | 2.60 (5.73) |
| 20% 2,4-dimethyl-3-pentanol (DMPDH) in DCPD/ENB 92.5/7.5 5 | 0.89 (1.97) |
| Diethylaluminum chloride (DEAC)-neat | 0.90 (1.98) |
| Silicon tetrachloride ($SiCl_4$) | 0,32 (0.7) |
| | 181.20 (400 lbs.) |

Component A is formulated in a reactor since the cocatalyst is formed by the reaction of alcohol and DEAC. 176.22kg (389 lbs.) of an DCPD/ENB monomer solution is added to a reactor and maintained under $N_2$ pressure. The remaining components are added in the following order DEAC, DMPOH, POH and $SiCl_4$. The PEAC is then mixed in for 10 minutes, following which the alcohols are added. Component A is then degassed by purging with nitrogen through a dip tube at 1.42m$^3$/h (50 SCFH) and 67.73 kPa (20" Hg).The reactor is heated to 50°C and held for 70 minutes, following which cooling water is added. When cooled to 30°C, the $N_2$ purge is turned off. After degassing, $SiCl_4$ is added and mixed for 15 minutes. The component is degassed again at 67,73 kPa (20" Hg) vacuum with slow agitation.

| Component B (catalyst component) | weight (kg) (lbs.) |
|---|---|
| Dicyclopentadiene (DCPD) | 155.22 (342.67) |
| Ethylidene norbornene (ENB) | 12.58 (27.78) |
| Diene 55 polybutadiene | 6.34 (14.0) |
| Tris-2,4-dibutylphenyl phosphite, Mark 2112 antioxidants | 2.72 (6.0) |
| Molybdate Catalyst (48% DCPD/END 92.5/7.5) $[(C_{12}H_{25})_3NH]_4Mo_8O_{26}$ | 1.59 (3.50) |

174.40 kg (385 lbs.) of a DCPD/ENB monomer mixture is added to a reactor. The other components are then funneled through a valve into the reactor and mixed for 30 minutes. The catalyst component is then degassed for 30 minutes at 67.73kPa (20" Hg) with slow agitation.

Both components A and B are stored in epoxy lined drums.

Example 1

This example demonstrates the use of combinations of at least one tertiary or hindered primary or hindered secondary alcohol which alcohol alone has the capacity to extend pot life of a molding monomer mixture together with at least one unhindered primary or unhindered secondary alcohol which alone does not have the capacity to extend pot life. Such alcohol combinations have the capacity to extend pot life and also to reduce mold temperature by 10 to 80°C, but more realistically 30 to 60°C. The gel times of the formulations at low mold temperatures are also extended by these combinations.

The experiments were carried out by first combining all of the recipe ingredients in a glass pop bottle, inserting a valved pouring spout rigged to pressurize the bottle to approximately 1.15 - 1,31 kPa (2-3 psig), inserting the pouring spout in the mold inlet, and opening the valve on the pouring spout thus filling the mold. Only half the mixture in the bottle was poured out into the mold. The other half remained in the bottle and was used to measure the pot life of the material at room temperature. Pot life was recorded as the point when the first noticeable increase in viscosity occurred in the mixture in the bottle. During preparation of the recipe in the bottle, the ingredients were added in the following order: First, the impact modifier was added to the monomer mixture in the bottle and allowed to dissolve. Next, the monomer diluted solution of the tertiary alcohol, hindered secondary alcohol, or hindered primary alcohol was added to the bottle, then the monomer diluted solution of DEAC, then the monomer diluted solution of n-propanol, then the monomer diluted solution of silicon tetrachloride activator, and finally, the monomer diluted solution of tridodecylammonium molybdate catalyst. After each addition, the ingredients in the bottle were well mixed. After the silicon tetrachloride was added, a vacuum was pulled on the bottle to remove dissolved gases.

Table I

| Exp. No. | Wt. Ratio Monomer | Monomer (grams) | 0.5MDEAC (mls) | 1.0M n-PrOH | 1.0M Alcohol Name | 1.0M Alcohol (mls) | ROH/Al | 0.1M Mo (mls) | 0.25M $SiCl_4$ (mls) | Impact Mod.(g) | Mold T.(°C) | Pot Life (min.) | Max. T. (°C) | % Conv. |
|---|---|---|---|---|---|---|---|---|---|---|---|---|---|---|
| 1. | 90/10 DCPD/ENB | 82.8 | 4.0 | 0.6 | t-BA | 1.0 | 0.8 | 5.0 | 4.0 | 2.5 | 75 | 300 | 165 | 98.8 |
| 2. | 90/10 DCPD/ENB | 82.8 | 4.0 | 1.0 | t-BA | 1.0 | 1.0 | 5.0 | 4.0 | 2.5 | 75 | 300 | 119 | 97.4 |
| 3. | 90/10 DCPD/ENB | 82.8 | 4.0 | 0.3 | t-BA | 1.0 | 0.8 | 5.0 | 4.0 | 2.5 | 75 | 180 | 151 | 98.0 |
| 4. | 90/10 DCPD/ENB | 82.8 | 4.0 | 0.7 | t-BA | 1.3 | 1.0 | 1.0 | 4.0 | 2.5 | 75 | 450 | 112 | 97.6 |
| 5. | 90/10 DCPD/ENB | 82.8 | 4.0 | 0.9 | t-BA | 0.7 | 0.8 | 5.0 | 4.0 | 2.5 | 75 | 200 | 161 | 98.9 |
| 6. | 90/10 DCPD/ENB | 82.8 | 4.0 | 0.5 | t-BA | 0.7 | 0.6 | 5.0 | 4.0 | 2.5 | 75 | 25 | 190 | 99.2 |
| 7. | 90/10 DCPD/ENB | 82.9 | 4.0 | 0.3 | DMA | 1.3 | 0.8 | 5.0 | 4.0 | 2.5 | 75 | 40 | 138 | 97.6 |
| 8. | 90/10 DCPD/ENB | 84.0 | 4.0 | 0.9 | DMA | 0.7 | 0.8 | 5.0 | 4.0 | 2.5 | 75 | 45 | 172 | 96.9 |
| 9. | 90/10 DCPD/ENB | 84.7 | 4.0 | 0.3 | EPA | 1.3 | 0.8 | 5.0 | 4.0 | 2.5 | 75 | 55 | 165 | 97.7 |
| 10. | 90/10 DCPD/ENB | 83.6 | 4.0 | 0.9 | EPA | 0.7 | 0.8 | 5.0 | 4.0 | 2.5 | 75 | 23 | 145 | 97.7 |

In Table I, above, the following contractions appear:

| | |
|---|---|
| DMA | - 2,4-dimethyl-3-pentanol |
| EPA | - 3-ethyl-3-pentanol |
| $SiCl_4$ | - tetrachloro silane |
| Impact Mod. | - Diene 55 or Kraton® D-1102 (Diene 55 is a polybutadiene polymer; Kraton® D-1102 is a styrene-butadiene-styrene block copolymer) |
| MTD | - methyltetracyclododecene |
| ENB | - ethylidene norbornene |
| DEAC | - diethylaluminum chloride |
| n-PrOH | - normal propyl alcohol |
| t-BA | - tertiary butyl alcohol |
| Max. T | - maximum temperature achieved during polymerization in the mold |

The results in Table I, above, demonstrate that the alcohol mixtures are effective in extending pot life of a monomer formulation and in lowering mold temperature. Pot lives greater than about one-half hour can be achieved as well as mold temperatures which are 10 to 80°C lower than otherwise could practically be used if only a tertiary alcohol or hindered primary alcohol or hindered secondary alcohol were used in the formation of the cocatalyst. The gel times for these monomer formulations at low mold temperatures are also extended.

Example 2

This example demonstrates the manufacture of an article within the scope of the invention. An electrolytic cell head having a weight in excess of 226.5kg (500 lbs) was made by bulk polymerizing a monomer mixture of dicyclopentadiene and ethylidene norbornene in an epoxy mold. The two monomer components, described above, were used. The alcohol to aluminum ratio was 1:1.

The cocatalyst component was degassed further by applying a vacuum [33.86 kPa (10"Hg)] for about 60 minutes with a nitrogen purge 5.66$m^3$/h ((200 SFCH) $N_2$). This was repeated at 50°C for 1.5 hours at 50.80kPa (15" Hg) and a slow nitrogen stream of 1,42 $m^3$/h (50 SCFH) $N_2$. The cocatalyst component provided a head space ratio parameter of approximately 1.3, which was measured by the procedures given above using a 0.946 l (quart) pop bottle filled 15.88cm (6.25") from the bench top.

Component A and Component B were combined and injected into a mold by the use of a reaction injection molding machine provided by Admiral having a radial piston and gear pump which provided continuous flow.

The mold comprised two epoxy sections, one male section to define the interior of the electrolytic cell head and one female section to define the exterior of the cell head. The mold had a width greater than 152.4 cm (5'), a length greater than 304,8 cm (10') and a height greater than 121,9 cm (4'). The female epoxy section was supported in the steel frame and surrounded by heat transfer coils and insulation. The male section was similarly constructed. When the two mold sections were assembled, the cavity defined an electrolytic cell head which was upside down. The two mold sections were held together by bolts near the top of each frame. The mold was gated at the bottom, where the top of the electrolytic cell head is defined and a plurality of vents (8) were distributed at the top of the mold, where the flanged base of the electrolytic cell head is defined.

The mixed components were injected from the reaction injection molding machine at a continuous rate of 1.91 kg/s (4.2 lbs. per second) at an injection pressure of 6.65 MPa (950 psig.) The mold was inclined at 45° from the floor with the use of a crane to aid in filling.

The mold temperature was 34° C ± 5° C , with variations due to its large size. The injected formulations had a temperature of 35°C. Thermocouples were positioned about the mold cavity to monitor temperature increases.

The mold was filled in about 2.9 minutes, which was slightly longer than the calculated 2.6 minutes predicted for a 299.5kg (650 lb.) shot. The time to exotherm for the reactive formulation of the mix head was determined to be 9.7 mins. at 47°C. This is believed to correspond to the time to exotherm of 14.25 mins. at the initial material temperature of 35°C. This extrapolation is based on a change in time to exotherm for the formulation shown in Example 3 which follows.

After the mold was filled, rapid exotherm was first detected near a vent at 12 mins. Rapid exotherm at the mix head was detected shortly thereafter (less than 2 mins.). After about 20 mins., efforts were made to demold the part; however, the part stuck to the mold, requiring a few hours to release the part. It was necessary to damage the mold and free the part. However, the part showed no structural defects on molding. Due to the sticking, it was necessary to dislodge the pipe flange mandrel with a sledge hammer, which resulted in a crack in the flange.

Minor voids caused by bubbles appeared in the pipe flange and top portion due to excessive turbulence during

fill. This turbulence was caused by an excessive gap between the mix head and retractable piston of the gate (2.54 cm (1")), this gap should be in the neighborhood of 0.32cm (0.125").

The example illustrates the difficulties in molding large parts. Except for the damage caused in releasing the part, the electrolytic cell could have been put to use.

Example 3

Another part was molded in the same mold using identical equipment. The monomer formulations described above were used. The ratio of total alcohol to diethylaluminum chloride was 1.05:1.

The cocatalyst component was degassed by applying a vacuum (50,80 kPa (15" Hg)) for 60 mins. under a nitrogen stream of 5.66 $m^3$/h (200 SCFH) $N_2$. This was repeated at 50°C for 30 mins. at a stream of 1.42 $m^3$/h (50 SCFH) $N_2$. The cocatalyst component provided a head space ratio parameter of approximately 3.2, as measured by the procedures given in Example 1.

The mixed components were injected into the gate at a continuous rate of 1,88 kg/s (4.15 lbs per second) at an injection pressure of 6.65 MPa (950 psig). The mold was inclined 20° from the floor with the use of a crane. The mold temperature was 34°C ± 5°C with the variations caused by the large size of the mold. The initial temperature of the reactive formulation was 57.2°C. The mold was filled in 2.4 mins., which was slightly shorter than the 2.6 mins. calculated for a 294,5kg (650 lb.) part. The time to exotherm for this formulation out of the mix head was measured to be 13 mins. at 40°C and 16.3 mins. at 37.2°C. For these values, it is presumed the exotherm at the initial material temperature of 35°C was 16.3 mins.

After the mold was filled, a rapid exotherm was first detected at a vent at 13.4 mins. Rapid exotherm near the mix head was detected shortly thereafter (2.4 mins.).

After 21 mins. from the initiation of the mold fill, the mold sections were unbolted and, after 45 mins., the part was removed from the mold. The part had a good inner surface. However, voids were created by incomplete venting and bubbles caused by turbulence at the mix head. This turbulence was caused by a large gap between the mix head and the retractable piston of the gate. The gap was 2,54 cm (1"), whereas it should have been much less.

**Example 4**

An electrolytic cell head suitable for use in industry was made in the same mold using the same equipment described in Example 2. The same monomer mixture and catalyst and cocatalyst components were used as described in Example 2. The cocatalyst was modified slightly in that the ratio of total alcohol to diethylaluminum chloride was 1.115:1. The cocatalyst component A was degassed to provide a head space parameter value of approximately 1.2.

The reactive formulation was fed from the RIM machine into the mold at a rate of 1,85 kg/s (4.08 lbs. per second) and the mold was inclined at an angle of 40° from the floor during fill. The mold temperature was maintained at 32°C to 38°C. The shot charge targeted was 292,98 (660 lbs.) and the final part weight was 258,55kg (570 lbs). A fill time of 162 seconds was calculated. However, injection was stopped after overflow at 150 seconds.

The time to exotherm for the reactive formulation was measured as 9.3 minutes at 40°C and was presumed to be 14 minutes at the initial material temperature of the reactive formulation, which was 37°C. Exotherm appeared to occur at a vent after 11 minutes. The bolts were loosened on the mold after 12 minutes and a part was released. The electrolytic cell had good surface characteristics and was good enough to be put in service. The retractable piston was placed 2,38mm (3/32") from the mix head unlike the previous examples and very little excess turbulence resulted. In addition, a mold release agent was used and very little sticking occurred. Where sticking did occur, slight warping resulted but did not effect the structural integrity of the electrolytic cell head produced.

**Example 5**

A mold trial identical to Example 4 was repeated except that the cocatalyst used was modified slightly to provide an alcohol to diethylaluminum chloride ratio of 1.125:1. In addition, the cocatalyst component was degassed to obtain a head space ratio parameter of approximately 0.9.

The process was modified slightly by maintaining the mold at an incline of 7.5° from the floor and the mixture was fed into the mold at 1,36 kg/s (3 lbs. per second).

The electrolytic cell head was released from the mold at about the same time interval as in Example 4. The cell head had no structural defects and an excellent inner surface. Relatively few voids were located on the outside of the cell head. The part was found to be acceptable to be put in service.

The preceding examples can be repeated with similar success by substituting the generically or specifically described reactants and/or operating conditions of this invention for those used in the preceding example.

## Claims

1. A method for producing a molded article weighing in excess of 500 lbs. (226.8 kg) by the ring-opening bulk polymerization of a reactive formulation, said method comprising combining a plurality of reactant streams to form said reactive formulation having a gel time in excess of 2 minutes at 40 °C and conveying said reactive formulation into a mold where polymerization takes place, wherein one of said reactant streams contains a metathesis catalyst component, and a second of which contains a cocatalyst component in combination with at least one norbornene-functional monomer, said cocatalyst component is selected from an alkoxyalkylaluminum or alkoxyalkylaluminum halide derived from an alkylaluminum or alkylaluminum halide and a combination of a first alcohol and a second alcohol, said first alcohol is selected from tertiary alcohols, hindered primary alcohols, hindered secondary alcohols and mixtures thereof, and said second alcohol is selected from unhindered primary alcohols, unhindered secondary alcohols, and mixtures thereof, wherein said alkylaluminum halide and said first and second alcohols are reacted in the norbornene-functional monomer to form the alkoxyalkylaluminum halide cocatalyst composition, and wherein the components of the reactive formulation are degassed prior to use to reduce the level of dissolved gas to provide a head-space ratio value of below 5, wherein the head-space ratio parameter of a liquid is the mole percent of gas in the head-space of a closed vessel which evolved from a sample of the liquid at 25°C after 15 minutes, wherein said head-space is initially filled with inert gas at 98066.5 Pa (1 atm) pressure and has volume equal to 25% of the total volume of said closed vessel.

2. The method of claim 1 wherein said metathesis catalyst component reactant stream is degassed.

3. The method of claim 1 or 2 wherein said molar ratio of said first alcohol to said second alcohol is in the range of 1:10 to 10:1.

4. The method of claim 1 wherein said first alcohol is 2,4-dimethyl-3-pentanol and said second alcohol is n-propanol.

5. The method of claim 1, 2, or 3 wherein said alkylaluminum halide is selected from a dialkylaluminum halide.

6. The method of claim 4 wherein said dialkylaluminum halide is diethylaluminum chloride.

7. The method of claim 1, 2, 3, 4, 5, or 6 wherein said norbornene-functional monomer is selected from norbornene, dicyclopentadiene, ethylidene norbornene, tricyclopentadiene, tetracyclopentadiene, and tetracyclododecene.

8. The method of claim 1, 2, 3, 4, 5, 6, or 7 wherein said catalyst component is selected from an organoammonium tungstate or molybdate, tridodecylammonium tungstates and molybdates, methyltricaprylammonium tungstates and molybdates, tri(tridecyl) ammonium tungstates and molybdates, and trioctylammonium tungstates and molybdates..

9. The method of claim 1, 2, 3, 4, 5, 6, 7, or 8 wherein at least one of said plurality of reactant streams contains a chlorosilane activator.

10. The method of claim 9 wherein said chlorosilane activator is tetrachlorosilane.

11. The method of claim 8 wherein the ratio of aluminum in said cocatalyst to molybdenum or tungsten in said catalyst is in the range of 200:1 to 1:10.

12. The method of claim 8 wherein said organoammonium molybdate and tungstate catalysts are employed in a range of 0.01 to 50 millimoles of molybdenum or tungsten per mole of total monomer.

## Patentansprüche

1. Verfahren zur Herstellung eines geformten Gegenstandes, der mehr als 500 lbs. (226,8 kg) wiegt, durch Ringöffnungsmassepolymerisation einer reaktiven Formulierung, wobei das Verfahren die Kombination einer Mehrzahl von Reaktantenströmen, um die reaktive Formulierung zu bilden, die eine Gelzeit von mehr als 2 min bei 40 °C aufweist, und die Beförderung dieser reaktiven Formulierung in ein Werkzeug, in dem die Polymerisation stattfindet, umfasst, worin einer der Reaktantenströme eine Metathesiskatalysator-Komponente enthält, und ein zweiter derselben eine Cokatalysator-Komponente in Kombination mit wenigstens einem Norbornen-funktionalen Monomer enthält, wobei die Cokatalysator-Komponente aus Alkoxyalkylaluminium oder Alkoxyalkylaluminiumhalogenid ausgewählt ist, die von einem Alkylaluminium oder Alkylaluminiumhalogenid und einer Kombination eines ersten Alkohols und eines zweiten Alkohols abgeleitet sind, wobei der erste Alkohol aus tertiären Alkoholen, gehinderten, primären Alkoholen, gehinderten, sekundären Alkoholen und Mischungen derselben ausgewählt ist, und der zweite Alkohol aus ungehinderten, primären Alkoholen, ungehinderten, sekundären Alkoholen und Mischungen derselben ausgewählt ist, worin das Alkylaluminiumhalogenid und der erste Alkohol und der zweite Alkohol in dem Norbornen-funktionalen Monomer umgesetzt werden, um die Alkylaluminiumhalogenid-Cokatalysator-Zusammensetzung zu bilden, und worin die Komponenten der reaktiven Formulierung vor der Verwendung entgast werden, um den Gehalt an gelöstem Gas zu reduzieren, um einen Headspace- Verhältniswert von weniger als 5 bereitzustellen, worin der Parameter des Headspace-Verhältnisses einer Flüssigkeit die Mol-% Gas im Kopfraum eines geschlossenen Gefäßes sind, das aus einer Probe der Flüssigkeit nach 15 min bei 25 °C entwickelt wurde, worin der Kopfraum anfänglich mit einem inerten Gas eines Drucks von 98066,5 Pa (1 at) gefüllt wird, und derselbe ein Volumen aufweist, das gleich 25 % des Gesamtvolumens des geschlossenen Gefäßes ist.

**2.** Verfahren gemäß Anspruch 1, worin der Reaktantenstrom der Metathesiskatalysator-Komponente entgast ist.

**3.** Verfahren gemäß den Ansprüchen 1 oder 2, worin das Stoffmengenverhältnis des ersten Alkohols zum zweiten Alkohol im Bereich von 1:10 bis 10:1 liegt.

**4.** Verfahren gemäß Anspruch 1, worin der erste Alkohol 2,4-Dimethyl-3-pentanol ist, und der zweite Alkohol n-Propanol ist.

**5.** Verfahren gemäß den Ansprüchen 1, 2 oder 3, worin das Alkylaluminiumhalogenid aus Dialkylaluminiumhalogenid ausgewählt ist.

**6.** Verfahren gemäß Anspruch 4, worin das Dialkylaluminiumhalogenid Diethylaluminiumchlorid ist.

**7.** Verfahren gemäß den Ansprüchen 1, 2, 3, 4, 5 oder 6, worin das Norbornen-funktionale Monomer aus Norbornen, Dicyclopentadien, Ethylidennorbornen, Tricyclopentadien, Tetracyclopentadien und Tetracyclododecen ausgewählt ist.

**8.** Verfahren gemäß den Ansprüchen 1, 2, 3, 4, 5, 6 oder 7, worin die Katalysator-Komponente aus einem Organoammoniumwolframat oder -molybdat, Tridodecylammoniumwolframaten und -molybdaten, Methyltricaprylammoniumwolframaten und -molybdaten, Tri-(tridecyl)ammoniumwolframamten und -molybdaten und Trioctylammoniumwolframaten und -molybdaten ausgewählt ist.

**9.** Verfahren gemäß den Ansprüchen 1, 2, 3, 4, 5, 6, 7 oder 8, worin wenigstens einer der Mehrzahl der Reaktantenströme einen Chlorsilan-Aktivator enthält.

**10.** Verfahren gemäß Anspruch 9, worin der Chlorsilan-Aktivator Tetrachlorsilan ist.

**11.** Verfahren gemäß Anspruch 8, worin das Verhältnis von Aluminium in dem Cokatalysator zu Molybdän in dem Katalysator im Bereich von 200:1 bis 1:10 liegt.

**12.** Verfahren gemäß Anspruch 8, worin die Organoammoniummolybdat- und -wolframat-Katalysatoren in einem Bereich von 0,01 bis 50 Millimol Molybdän oder Wolfram pro mol gesamtes Monomer verwendet werden.

**Revendications**

**1.** Procédé de production d'un article moulé dont le poids dépasse 226, 8 kg (500 livres) par polymérisation en masse avec ouverture du noyau d'une formulation réactive, ledit procédé comprenant la combinaison d'une pluralité de flux de réactifs pour former ladite formulation réactive ayant un temps de gélification supérieur à 2 minutes à 40°C et l'acheminement de ladite formulation réactive dans un moule où se déroule une polymérisation, dans lequel un desdits flux de réactifs contient un composant catalytique à métathèse et un second desdits flux contient un composant de co-catalyse en combinaison avec au moins un monomère à fonctionnalité norbornène, ledit composant de co-catalyse est choisi parmi un alcoxyalkylaluminium ou un halogénure d'alcoxyalkylaluminium tiré d'un alkylaluminium ou d'un halogénure d'alkylaluminium et une combinaison d'un premier et d'un second alcools, ledit

premier alcool est choisi parmi des alcools tertiaires, des alcools primaires empêchés, des alcools secondaires empêchés et leurs mélanges et ledit second alcool est choisi parmi des alcools primaires non empêchés, des alcools secondaires non empêchés et leurs mélanges, dans lequel on fait réagir ledit halogénure d'alkylaluminium et lesdits premier et second alcools dans le monomère à fonctionnalité norbornène pour former la composition de co-catalyse d'halogénure d'alcoxyalkylaluminium, et dans lequel les composants de la formulation réactive sont dégazés avant utilisation pour réduire le niveau de gaz dissous pour donner une valeur du rapport de l'espace de tête inférieure à 5, dans lequel le paramètre du rapport de l'espace de tête d'un liquide est le pourcentage molaire de gaz dans l'espace de tête d'un récipient fermé qui se dégage d'un échantillon du liquide à 25°C après 15 minutes, dans lequel ledit espace de tête est initialement rempli de gaz inerte à une pression de 98066,5 Pa (1 atmosphère) et a un volume égal à 25% du volume total dudit récipient fermé.

**2.** Procédé selon la revendication 1, dans lequel ledit flux de réactif de composant catalytique à métaièse est dégazé.

**3.** Procédé selon la revendication 1 ou 2 dans lequel lédit rapport molaire dudit premier alcool audit second alcool se situe dans la plage de 1:10 à 10:1.

**4.** Procédé selon la revendication 1, dans lequel ledit premier alcool est le 2,4-diméthyl-3-pentanol et ledit second alcool est le n-propanol.

**5.** Procédé selon la revendication 1, 2 ou 3, dans lequel ledit halogénure d'alkylaluminium est un halogénure de dialkylaluminium.

**6.** Procédé selon la revendication 4, dans lequel ledit halogénure de dialkylaluminium est le chlorure de diéthylaluminium.

**7.** Procédé selon la revendication 1, 2, 3, 4, 5 ou 6, dans lequel ledit monomère à fonctionnalité norbornène est choisi parmi le norbornène, le dicyclopentadiène, l'éthylidène norbornène, le tricyclopentadiène, le tétracyclopentadiène et le tétracyclododécène.

**8.** Procédé selon la revendication 1, 2, 3, 4, 5, 6 ou 7, dans lequel ledit composant catalytique est choisi parmi le tungstate ou molybdate d'organoammonium, les tungstates et molybdates de tridodécylammonium, les tungstates et molybdates de méthyltricaprylammonium, les tungstates et de tri(tridécyl)ammonium et les tungstates et molybdates de trioctylammonium.

**9.** Procédé selon la revendication 1, 2, 3, 4, 5, 6, 7 ou 8, dans lequel au moins un des flux de réactifs de ladite pluralité de flux de réactifs contient un activateur chlorosilane.

**10.** Procédé selon la revendication 9, dans lequel ledit activateur chlorosilane est le tétrachlorosilane.

**11.** Procédé selon la revendication 8, dans lequel le rapport de l'aluminium dans ledit co-catalyseur au molybdène ou au tungstène dans ledit catalyseur se situe dans la plage de 200:1 à 1:10.

**12.** Procédé selon la revendication 8, dans lequel lesdits catalyseurs molybdate et tungstate d'organoammonium sont utilisés dans la plage de 0,01 à 50 millimoles de molybdène ou de tungstène par mole de monomère total.